# EUROPÄISCHE PATENTSCHRIFT

(11) **EP 3 940 716 B1**
(45) Veröffentlichungstag und Bekanntmachung des Hinweises auf die Patenterteilung: **20.12.2023**
(21) Anmeldenummer: 21000180.6
(22) Anmeldetag: 07.07.2021
(51) Int. Cl.: G21C 9/004, G21F 9/02, B01D 46/30, B01D 53/04

(54) **REAKTORDRUCKENTLASTUNGSFILTERSYSTEM**
REACTOR PRESSURE RELIEF FILTER SYSTEM
SYSTÈME DE FILTRE DE DÉCHARGE DE PRESSION DU RÉACTEUR

(30) Priorität: 17.07.2020 DE 102020004299
(43) Veröffentlichungstag der Anmeldung: 19.01.2022
(73) Patentinhaber: Westinghouse Electric Germany GmbH, 68167 Mannheim (DE)
(72) Erfinder: Sassen, Felix, 68163 Mannheim (DE); Jiménez Escalante, Javier, 67227 Frankenthal (Pfalz) (DE); Hartmann, Christoph Oliver, 76297 Stutensee-Blankenloch (DE)
(74) Vertreter: Eickmeyer, Dietmar

(56) Entgegenhaltungen:
- DE-A1- 2 509 953
- DE-A1- 3 815 850
- DE-C3- 3 806 872
- US-A- 3 720 043
- US-A- 4 848 992

## Beschreibung

Die Erfindung betrifft ein Reaktordruckentlastungsfiltersystem mit einem Druckbehälter in dem ein Filterbett angeordnet ist, das eine erste Filterbettschicht aufweisend ein erstes Filtermaterial zur Rückhaltung von Aerosolen hat, wobei der Druckbehälter geodätisch oberhalb des Filterbettes wenigstens eine Einlassöffnung aufweist, durch die ein zu filterndes Medium in den Druckbehälter zugeführt ist, wobei das Filterbett von einem geodätisch unten angeordneten Druckbehälterboden durch ein Tragsystem beabstandet ist, wobei eine Druckbehälterwand im Druckbehälterboden und/oder in einem Druckbehälterwandbereich zwischen dem Druckbehälterboden und dem Filterbett wenigstens eine Auslassöffnung aufweist, durch die das gefilterte Medium aus dem Druckbehälter ausgeleitet ist, und wobei das Filterbett eine zweite horizontal angeordnete Filterbettschicht mit einem zweiten Filtermaterial zur Abscheidung von gasförmigen radioaktiven Stoffen aufweist, und wobei die zweite Filterbettschicht in geodätischer Richtung oberhalb des Tragsystems angeordnet ist.

Es ist allgemein bekannt, dass in nuklearen Kernanlagen, wie beispielsweise einem Kernkraftwerk, umfassende Sicherungsmaßnahmen gegen das ungewollte Austreten von Radioaktivität vorgesehen sind. So gibt es bei Kernkraftwerken in der Regel eine Reaktorummantelung, die häufig entweder als gasdichte Stahlhülle (Confinement) oder als gasdichter Reaktorsicherheitsbehälter (Containment, RSB) ausgeführt ist, und die üblicherweise den Reaktor und den Primärkreislauf umschließt. Die Reaktorummantelung stellt dabei sicher, dass im Betrieb und in einem Auslegungsstörfall aerosol- und gasförmige radioaktive Stoffe im Innern der Ummantelung verbleiben und nicht in die Umgebung gelangen.

Es kann aber auch zu einem die Auslegung der Anlage überschreitenden Störfall kommen, beispielsweise bei einem vergleichsweise langen Ausfall aller Systeme zur Nachwärmeabfuhr. Dann könnte es zu einer unzulässigen Druckerhöhung in der Ummantelung und hierdurch gegebenenfalls zu Schäden an der Ummantelung kommen. Um dieses Szenario zu vermeiden gibt es für Kernkraftwerke Systeme zur kontrollierten und gefilterten Druckentlastung der Ummantelung.

So ist beispielsweise aus der amerikanischen Patentschrift US 4848992 ein Sandbettfilter für ein Confinement bekannt geworden, bei dem eine Sandschicht in einem Kessel eingebracht ist. Das zu filternde Gas aus dem Confinement wird dabei durch den Sand geleitet, der vor allem die im zu filternden Gas vorhandenen Aerosole ab scheidet, wodurch ein großer Teil der Spaltprodukte im Sandbettfilter zurückgehalten wird. Das aerosolgefilterte Gas wird dann in die Umgebung leitet.

Ein weiteres System zur kontrollierten Druckentlastung gemäß dem Patentdokument DE 3815850 A1 sieht einen vertikal von unten nach oben durchströmten zweistufigen Filterbehälter vor, der mit vergleichsweise komplizierten Einbauten im Filterbehälter ein Metallfaserfilter sowie ein Molekularsieb vorsieht.

Eine weitere Anordnung für die Druckentlastung des Sicherheitsbehälters einer Kernkraftanlage im Störungsfall gemäß der Patentschrift DE 3806872 C3 sieht ein Filteraggregat vor, das ein Molekularsiebteilaggregat sowie ein Aerosolfilterteilaggregat aufweist, wobei die Teilaggregate über ein vergleichsweise kompliziertes Rohrleitungssystem mit Reduzierventil und steuerbaren Armaturen verbunden sind.

Zudem ist aus dem Dokument DE 2509953 A1 eine Anlage zur Filterung fester Aerosole mittels eines Sandbettes bekannt geworden, bei dem das Sandbett in Strömungsrichtung in einzelne Schichten aufgeteilt ist und sich der Kornradius des Sandes von Schicht zu Schicht in Strömungsrichtung verkleinert. Auf diese Weise werden die Filtereigenschaften der bis dahin bekannten Sandfilter verbessert.

Schließlich ist aus dem Patentdokument US 3720043 eine Methode zur effizienten Filterung von gasförmigen sowie festen radioaktiven Stoffen aus einem Luftstrom bekannt geworden, bei dem ein Sandbettfilter mit verschiedenen Filtermaterialien als Schichten ausgebildet sein können.

Nachteilig an diesem Stand der Technik ist, dass gasförmige radioaktive Stoffe, beispielsweise elementares oder organisches Jod, nur in ganz geringem Maß im Sandfilter zurückgehalten werden und somit auch im gefilterten Gas noch Radioaktivität vorhanden ist und so in die Umgebung gelangt. Um die radioaktive Last im gefilterten Gas weiter zu reduzieren ist es grundsätzlich möglich, mehrere Filter hintereinander zu schalten, bis ein gewünschter Grenzwert an Radioaktivität unterschritten wird. Auch zusätzliche metallische Vorfilter zur Abscheidung von Spaltprodukten in Aerosolform sind bekannt. In jedem Fall bedeutet dies jedoch einen erheblichen anlagetechnischen sowie konstruktiven Aufwand.

Ausgehend von diesem Stand der Technik ist es Aufgabe der Erfindung, ein Reaktordruckentlastungsfiltersystem für eine Reaktorummantelung bereitzustellen, welches eine verbesserte Filtereffizienz hat und dabei eine möglichst einfache Konstruktion aufweist. Außerdem soll ein Flusswiderstand in einer Filterschicht bedarfsweise anpassbar sein.

Die Aufgabe wird gelöst durch ein Reaktordruckentlastungsfiltersystem der eingangs genannten Art. Dieses ist dadurch gekennzeichnet, dass die zweite Filterbettschicht eine Stützstruktur aufweist, die eine Vielzahl von Stützzellen hat und für einen Mediumstrom aus der Richtung von geodätisch oberhalb der zweiten Filterbettschicht in Richtung der Tragstruktur gasdurchlässig ist, dass das zweite Filtermaterial in Zwischenräumen der Stützstruktur oder / und in den Stützzellen aufgenommen ist, und dass die zweite Filterbettschicht zwischen einer ersten und einer zweiten gasdurchlässigen, horizontal gelegenen Gewebeschicht horizontal angeordnet ist.

Die Grundidee der Erfindung besteht darin, in einem vergleichsweise einfachen technischen Objekt, nämlich einen Druckbehälter zu einem Filtersystem mit einer vergleichsweisen hohen Effizienz auszugestalten. Dazu ist neben einer ersten Filterbettschicht, die vor allem einen hohen Abscheidegrad für Aerosole hat, eine zweite Filterbettschicht vorgesehen, die ein zweites Filtermaterial aufweist, dass zur Abscheidung von gasförmigen radioaktiven Stoffen besonders geeignet ist. Ein zu filterndes Medium durchströmt also nicht nur eine erste Filterbettschicht, sondern auch eine weitere Filterschicht, welche speziell solche radioaktiven Stoffe aus dem zu filternden Mediumstrom herausfiltert, die von der ersten Schicht nicht gefiltert werden. Die Effizienz des Filters ist damit erhöht. Zudem findet die Filtrierung ausschließlich in einem einzigen Druckbehälter statt, was die Konstruktion besonders einfach hält. Dabei ist es vorteilhaft, wenn der Druckbehälter einen zylinderförmigen Bereich aufweist, dessen gedachte Mittelachse in geodätisch vertikaler Richtung ausgerichtet ist. In diesen zylinderförmigen Bereich lassen sich besonders einfach die horizontalen Filterbettschichten anordnen. Die Reihenfolge der Filterbettschichten in Strömungsrichtung des zu filternden Mediums gesehen, spielt dabei für den grundsätzlichen Erfindungsgedanken zunächst keine Rolle.

Zudem weist die zweite Filterbettschicht eine Stützstruktur auf, die eine Vielzahl von Stützzellen hat und für einen Mediumstrom aus der Richtung von geodätisch oberhalb der zweiten Filterbettschicht in Richtung der Tragstruktur gasdurchlässig ist. Dabei ist das zweite Filtermaterial in Zwischenräumen der Stützstruktur oder / und in den Stützzellen aufgenommen und die zweite Filterbettschicht ist zwischen einer ersten und einer zweiten gasdurchlässigen, horizontal gelegenen Gewebeschicht horizontal angeordnet. Auf diese Weise ist ein Flusswiderstand durch die zweite Filterbettschicht besonders einfach auf vorgegebene technische Randbedingungen anpassbar.

Ein besonderer Vorteil ergibt sich, wenn ein vorhandener Sandbettfilter in einem Druckbehälter durch ein Retrofit-Engineering zu einem erfindungsgemäßen Reaktordruckentlastungsfiltersystem umgebaut wird. Das Reaktordruckentlastungsfiltersystem ist also vorzugsweise ein Reaktordruckentlastungssandbettfiltersystem. Auf diese Weise kann die Filtereffizienz durch das Retrofit eines vorhandenen Sandbettfilters erheblich verbessert werden, während der Standort sowie der Platzbedarf des Filtersystems unverändert bleiben.

Eine bevorzugte Ausgestaltung des Reaktordruckentlastungsfiltersystems sieht vor, dass das zweite Filtermaterial als Molekularsieb ausgestaltet ist. Als Molekularsieb kommt bevorzugt ein natürliches oder synthetisches Zeolith in Betracht. Der Vorteil eines Molekularsiebs besteht vor allem darin, dass solche Molekularsiebe über eine hohe innere Mikroporosität verfügen und somit eine vergleichsweise sehr hohe spezifische Oberfläche aufweisen. Als Beispiel hierfür seien silberdotierte Zeolithe genannt. Der Filtereffekt beruht dann auf der Reaktion zwischen den auf der wirksamen gesamten Zeolithoberfläche aufgebrachten Silber und dem im Mediummassenstrom vorhandenen gasförmigen radioaktiven Stoffen, insbesondere gasförmigen elementarem und organischem Jod. Dieser Prozess ist auch als chemische Sorption bekannt. Ein Zeolith als Molekularsieb weist als weiteren Vorteil eine stabile Filterleistung über den gesamten thermohydraulischen Zustandsbereich auf, der durch die vorgelagerten Schichten induziert wird. Die Filterleistung ist also auch in transienten Phasen von Druck- und/oder Temperaturzuständen vergleichsweise stabil und hoch.

Die Filtereffizienz des Molekularsiebs hängt dabei im Wesentlichen von der Verweilzeit des zu filternden Mediums im Filterbett und der verfügbaren mit Silberatomen belegten Zeolithoberfläche ab. Um die Filtereffizienz weiter zu erhöhen, kann auch die Verweilzeit des zu filternden Mediums in der zweiten Filterbettschicht erhöht werden, indem die horizontale Fläche der zweiten Filterbettschicht erhöht wird, was eine Erhöhung des Druckbehälterdurchmessers insgesamt oder zumindest an dieser horizontalen Stelle des Druckbehälters zur Folge hat. Bei einer entsprechend großen horizontalen Flächen der zweiten Filterbettschicht reduziert sich die Strömungsgeschwindigkeit des zu filternden Mediums in vertikaler Richtung durch die Filterbettschicht, sodass die Durchströmzeit, also mithin die Verweilzeit, des zu filternden Mediums in der betreffenden Filterbettschicht entsprechend lang ist.

Das zweite Filtermaterial der zweiten Filterbettschicht nützt also eine chemische Sorption, während das erste Filtermaterial der ersten Filterbettschicht lediglich eine physikalische Abscheidung von Aerosolen vornimmt. Auch hierdurch wird die Filtereffizienz in vorteilhafter Weise erhöht.

Bei einer vorteilhaften Ausgestaltung des Reaktordruckentlastungsfiltersystems ist es vorgesehen, dass das zweite Filtermaterial eine materialabhängige Druckfestigkeit aufweist, und dass die Dicken der Filterbettschichten so gewählt sind, dass ein vorbestimmter Druckfestigkeitswert, der geringer ist als der Wert der materialabhängigen Druckfestigkeit, an jeder Stelle der zweiten Filterschicht unterschritten ist. Auf diese Weise ist sichergestellt, dass zum einen materialspezifische Grenzwerte eingehalten werden. Zum anderen kann beispielsweise aus Auslegungs- oder Sicherheitsgründen bei der Auslegung der zweiten Filterbettschicht besonders hohe Auslegungsreserven geschaffen werden.

Eine weitere vorteilhafte Ausgestaltung des Reaktordruckentlastungsfiltersystem sieht vor, dass eine gemessene Istdicke der zweiten Filterbettschicht eine Abweichung von höchstens +/- 5% eines vorgegebenen Solldickenwertes für die zweite Filterbettschicht aufweist. Bei der Herstellung der zweiten Filterbettschicht ist es vorteilhaft, auf eine gleichmäßige Schichtdicke und damit auf eine homogene Verteilung des zweiten Filtermaterials zu achten. Das trägt zu einer Vergleichmäßigung der Strömung des zu filternden Mediums durch die zweite Filterbettschicht bei. Typische Werte für einen Solldickenwert für die zweite Filterbettschicht eines Reaktordruckentlastungsfiltersystems liegen zwischen 30mm und 120mm. Die Abweichung für beispielsweise einen 50mm Solldickenwert liegt dann höchstens bei +/- 2,5mm, also mindestens bei einem gemessenen Wert führt die Istdicke von 47,5mm und höchstens bei einem gemessenen Wert für die Istdicke von 52,5mm. Besonders bevorzugt ist jedoch eine Abweichung von höchstens +/- 4% eines vorgegebenen sonstigen Wertes.

Eine weitere vorteilhafte Ausgestaltung des Reaktordruckentlastungsfiltersystem ist dadurch gekennzeichnet, dass durch eine Vergrößerung einer Schichtdicke der zweiten Filterbettschicht eine Verweilzeit des zu filternden Mediums in der zweiten Filterbettschicht bis zu einem vorgegebenen Wert verlängerbar ist, und dass durch eine Verringerung der Schichtdicke der zweiten Filterbettschicht die Verweilzeit des zu filternden Mediums in der zweiten Filterbettschicht bis zu einem vorgegebenen Wert verkürzbar ist. Auf diese Weise wird die Verweilzeit des zu filternden Mediums in der zweiten Filterbettschicht verlängert oder verkürzt, je nachdem was für die Auslegung des Reaktordruckentlastungsfiltersystems vorgesehen oder geboten ist.

Eine weitere vorteilhafte Ausgestaltung des Reaktordruckentlastungsfiltersystem kann auch dadurch gekennzeichnet sein, dass die zweite Filterbettschicht zwischen der ersten Filterbettschicht und dem Tragsystem angeordnet ist. Dann durchströmt das zu filternden Medium zunächst die erste Filterbettschicht und wird demgemäß von einem wesentlichen Teil der vorhandenen Aerosole befreit. Der sozusagen bereits "getrocknete" Mediumsstrom an zu filterndem Medium trifft dann auf die zweite Filterbettschicht, die einen auslegungsgemäßen Anteil von gasförmigen radioaktiven Stoffen aus dem Mediumsstrom entfernt, was den Wirkungsgrad des Reaktordruckentlastungsfiltersystems in vorteilhafterweise erhöht.

Zum einen ist durch die Stützstruktur in vorteilhaft einfacher Weise erreicht, dass die zweite Filterbettschicht eine vorgebbare definierte Schichtdicke aufweist. Zudem wird durch die Gewebeschichten ein ungewollter Eintrag von Partikeln des ersten Filtermaterials in die zweite Filterbettschicht verhindert. Dazu ist die Maschenweite der Gewebeschicht so gewählt, dass sie kleiner ist als die durchschnittliche Partikelgröße des ersten Filtermaterials. Zudem ist durch die Wahl einer entsprechenden Maschenweite der Gewebeschicht zwischen der zweiten Filterbettschicht und dem Tragsystem sichergestellt, dass auch kein Material des Molekularsiebs in das Tragsystem eindringt oder eingetragen wird. Ein weiterer Vorteil der Stützstruktur und der Gewebebahn besteht darin, dass diese die mechanischen Lasten ganz oder wenigstens teilweise so aufnehmen, dass das zweite Filtermaterial entsprechend von mechanischen Kräften entlastet ist.

Die Auslegung der zweiten Filterschicht unter Berücksichtigung der Stützstruktur und der Gewebeschichten ist so gewählt, dass der zu erwartende Druckverlust über die zweite Filterschicht geringer ist als der Druckverlust über die erste Filterschicht. Auf diese Weise ist das Risiko eines Verstopfens der zweiten Filterschicht minimiert. Gleichzeitig ist damit aber auch sichergestellt, dass das zu filternden Gas ohne einen unzulässigen Druckverlust zu verursachen die Gewebeschichten und das Molekularsieb durchströmt.

Für die Form der Stützzellen der Stützstruktur bietet sich eine Vielzahl von Möglichkeiten an. Vorteilhaft ist es, wenn die Stützzellen bei einem gedachten Querschnitt in horizontaler Richtung durch die Stützstruktur hohlzylindrisch sind und die Ausnehmung im Hohlzylinder im gedachten Querschnitt eine wabenförmige, quadratische, rechteckige, kreisförmige, elliptische oder rautenförmige Form ausweist. Auf diese Weise ist ein Optimum an Stabilität der Stützstruktur erreicht. Gleichzeitig wird eine vergleichsweise große freie Durchströmfläche für das zu filternden Medium durch die zweite Filterbettschicht ermöglicht, was zu einem vergleichsweise niedrigen Druckverlust über die zweite Filterbettschicht führt.

Eine alternative Ausgestaltung des Reaktordruckentlastungsfiltersystems sieht vor, dass durch eine einsprechende Gestaltung der Stützstruktur ein bestimmter freier Querschnitt, der für das zu filternde Medium für eine Durchströmung der zweiten Filterbettschicht zur Verfügung steht, vorgebbar ist, dass bei einer Verringerung des freien Querschnitts eine Verkürzung einer bestimmten Verweilzeit des zu filternden Mediums in der zweiten Filterbettschicht bis auf einen vorgegebenen Wert erreicht ist, und dass bei einer Vergrößerung des freien Querschnittes eine Verlängerung der bestimmten Verweilzeit des zu filternden Mediums in der zweiten Filterbettschicht bis zu einem vorbestimmten Wert erreicht ist. Durch die Beeinflussung des freien Querschnitts in der zweiten Filterbettschicht ist die Strömungsgeschwindigkeit beeinflusst und damit auch die Verweilzeit des zu filternden Mediums in der zweiten Filterbettschicht. Der freie Querschnitt ist derjenige horizontale Flächenanteil eines horizontalen Querschnitts durch die zweite Filterbettschicht, dass durch das zu filternden Medium durchströmt wird. Andere Teile des horizontalen Querschnitts durch die zweite Filterbettschicht können beispielsweise blockiert sein und daher nicht durchströmt werden, indem eine Anzahl von Waben der Stützstruktur beziehungsweise eine Anzahl von Stützzellen für das zu filternden Medium undurchlässig ausgestaltet sind. Es kann aber auch sein, dass die Wandstärke der Stützstruktur einfach erhöht ist und derart ein geringerer freier Querschnitt für das zu filternden Medium zur Verfügung steht. Dem Fachmann steht hier eine Vielzahl von ihm bekannten Möglichkeiten zur Verfügung. Das ist gemeint mit einer entsprechenden Ausgestaltung der Stützstruktur.

Eine weitere Verbesserung des Reaktordruckentlastungsfiltersystems wird erzielt, indem im Filterbett zwischen der ersten und zweiten Filterbettschicht in horizontaler Richtung ein Lochblech angeordnet ist, dass das Lochblech von der geodätisch weiter unten liegenden Filterbettschicht, also je nachdem von der ersten oder von der zweiten Filterbettschicht, einen so großen Abstand aufweist, dass der Abstand als Beruhigungsstrecke für die Strömung für das zu filternde Medium geeignet ist. Durch die so geschaffene Beruhigungsstrecke wird die Strömung des zu filternden Mediums vergleichmäßigt und somit die Effizienz des Reaktordruckentlastungsfiltersystems erhöht.

Das erfindungsgemäße Reaktordruckentlastungsfiltersystem kann zudem im Filterbett zwischen der ersten und zweiten Filterbettschicht eine dritte horizontale Filterbettschicht aufweisen, die ein drittes Filtermaterial zur Absorption von säurehaltigen Bestandteilen im zu filternden Medium aufweist. Auf diese Weise ist die Filtereffizienz weiter verbessert. Schließlich sind weitere Bestandteile des zu filternden Mediumstroms diesem entnommen und durch Absorption im dritten Filtermaterial gebunden.

Vorteilhaft ist es auch, wenn im Reaktordruckentlastungsfiltersystem ein Probeentnahmesystem an der Druckbehälterwand angebracht ist, mit dem bedarfsweise eine Probe des zweiten Filtermaterials entnehmbar ist. Auf diese Weise lässt sich besonders einfach die Belastung beziehungsweise der Verbrauch des zweiten Filtermaterials bestimmen. Zum andern ist mit einem solchen Probeentnahmesystem auch die Bestimmung der Filtereffizienz des Molekularsiebs, also die Wirkung des Zeoliths bestimmbar.

Als Tragsystem kommen insbesondere ein Einbauteil oder Einbauteile im Druckbehälter, beispielsweise in Form eines Lochblechs, in Betracht, das gegebenenfalls auch durch Stützen am Druckbehälterboden abgestützt ist. Oder das Tragsystem ist eine Schicht oder Schüttung aus einem körnigen Material oder Blähton, welches körnige Material oder Blähton eine durchschnittliche Partikelgröße aufweist, die größer ist als das erste oder zweite Filtermaterial. Dann wird das gesamte Gewicht der Filterbettschichten in besonders einfacher Weise, zuverlässig und vergleichmäßigt in den Druckbehälterboden geleitet, ohne dass eine Gefahr bestünde, dass das Einbauteil unter einer unvorhergesehenen Belastung überbeansprucht ist.

Zudem ist es vorgesehen, dass in der Schicht aus einem körnigen Material oder Blähton eine Vielzahl von Rohrelementen angeordnet sind, dass die Rohrelemente mit der wenigstens einen Auslassöffnung, also auch mit einer Vielzahl von Austrittsöffnungen verbunden sind und die Rohrelemente solche Ausnehmungen aufweisen oder so perforiert, sind dass das gefilterte Medium in die Rohrelemente gelangt und gleichzeitig vermieden ist, dass körniges Material oder Blähton in die Rohrelemente gelangt. Dabei ist es vorteilhaft, dass die Vielzahl von Rohrelemente keine weitere mechanische Unterstützung benötigt, sondern dass sie vollständig im körnigen Material oder im Blähton eingebettet oder umschlossen sind. Auch hierdurch ist die Konstruktion des Reaktordruckentlastungsfiltersystems weiter vereinfacht.

Sind mehrere oder viele Auslassöffnungen im Druckbehälter vorhanden, beispielsweise weil eine Vielzahl von Rohrelementen in der Schicht aus körnigem Material verlegt ist, ist es zudem vorteilhaft, wenn die einzelnen Auslassöffnungen strömungstechnisch außerhalb des Druckbehälters miteinander verbunden sind. Um mit einem vorteilhaft geringen Konstruktionsaufwand diese Verbindung sicherzustellen, ist es vorgesehen, dass im Falle von wenigstens zwei Auslassöffnungen ein Mediumsammelbehälter mit den wenigstens zwei Auslassöffnungen so verbunden ist, dass das gefilterte Medium in den Innenbereich des Mediumsammelbehälters gelangt, und dass der Mediumsammelbehälter eine Mediumausleiteöffnung aufweist.

Dazu ist es weiter vorteilhaft, wenn der Mediumsammelbehälter eine im Wesentlichen torusförmige Gestalt hat.

Weitere vorteilhafte Ausgestaltungsmöglichkeiten sind den weiteren abhängigen Ansprüchen zu entnehmen.

Anhand des in der Zeichnung dargestellten Ausführungsbeispiels sollen die Erfindung, weitere Ausführungsformen und weitere Vorteile näher beschrieben werden.

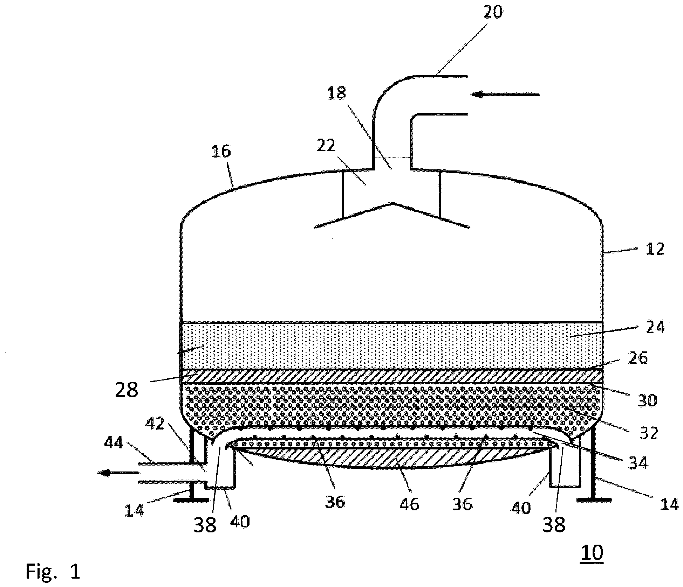

Es zeigt
- Fig. 1: ein Schnittbild durch ein exemplarisches Reaktordruckentlastungsfiltersystem.

Fig. 1, die einzige Figur, zeigt ein skizzenhaftes Schnittbild durch ein Reaktordruckentlastungfiltersystem 10 mit einem Druckbehälter 12, der auf Stützen 14 steht und damit von einem nicht dargestellten Boden beabstandet ist. Auf diese Weise ist eine visuelle Inspektion des Druckbehälters besonders einfach möglich. Der Druckbehälter 12 hat in seinem geodätisch oberen Bereich einen Behälterdom 16, der eine Einlassöffnung 18 aufweist an die ein Einlassrohr 20 angeschlossen ist. Dabei führt das Einlassrohr 20 das zu filternden Medium dem Druckbehälter 12 zu und ist dazu beispielsweise an ein in der Figur nicht dargestelltes Durchführungsbauteil in einem Confinement beziehungsweise einer Ummantelung eines Kernreaktors angeschlossen. Die Zuströmung des zu filternden Mediums in das Einlassrohr 20 ist durch einen Pfeil in der Figur symbolisiert, wobei das zu filternden Medium beispielsweise das mit Aerosol belastete Gas/Aerosol Gemisch aus der Ummantelung eines Kernreaktors ist. Im Bereich der Einlassöffnung 18 ist im Druckbehälter 12 ein Diffusorelement 22 angeordnet, dass zum einen das einströmende Medium im Druckbehälter 12 verteilt und zum andern die Geschwindigkeit des einströmenden zu filternden Mediums reduziert und damit auch den Druck des zu filternden Mediums verringert. Typische Werte für den Druck im Druckbehälter 12, der beispielsweise einen Durchmesser zwischen 5m und 15m aufweisen kann, liegen zwischen 1,05 bar und 1,5 bar.

Im gezeigten Beispiel strömt das zu filternde Medium also von oben in den Druckbehälter 12 ein, strömt durch das Diffusorelement 22 und durchströmt dann eine erste Filterbettschicht 24, eine erste Gewebeschicht 26, eine zweite Filterbettschicht 28, eine zweite Gewebeschicht 30 sowie eine Tragschicht 32. In der Tragschicht 32 ist eine Vielzahl von parallel zueinander gelegenen Rohrelementen 34 angeordnet, von denen in diesem Schnittbild jedoch nur ein Rohrelement 34 sichtbar ist, während alle anderen Rohrelemente 34 in der gleichen horizontalen Ebene gelegen sind, die durch das gezeigte Rohrelement 34 angegeben ist. Die Rohrelemente 34 weisen eine Vielzahl von Ausnehmungen 36 auf, die so dimensioniert sind, dass ein Blähton, der zur Herstellung der Tragschicht 32 im gewählten Beispiel verwendet wurde, nicht ins Innere des Rohrelements 34 gelangt. Gleichzeitig sind die Ausnehmungen 36 jedoch so groß, dass das gefilterte Medium, also das zu filternde Medium nach dem Durchströmen des Filterbettes, ins Innere der Rohrelemente 34 gelangt. Das gefilterte Medium wird durch die Rohrelemente 34 und durch eine Anzahl von Auslassöffnungen 38 im Druckbehälter 12 in einen ringförmigen Mediumsammelbehälter 40 geleitet, der an einer Stelle eine Mediumausleiteöffnung 42 hat. An dieser Mediumausleiteöffnung 42 ist ein Auslassrohr 44 angeschlossen, der das gefilterte Medium in die Umgebung leitet. Das Ausströmen in die Umgebung ist in der Figur durch einen Pfeil angedeutet.

Das zu filternden Medium wird unter einem bestimmten Druck dem Druckbehälter 12 zugeführt, typischerweise einem Druck zwischen 2 bar und 7 bar. Die Druckdifferenz zwischen dem zu filternden Medium und der Umgebung, in die das gefilterte Medium nach dem Durchströmen des Reaktordruckentlastungsfiltersystems 10 geleitet wird, sorgt dafür, dass das zu filternden Medium durch das Reaktordruckentlastungsfiltersystem 10 strömt, ohne dass dazu weitere technische Hilfsmittel wie Pumpen oder Gebläse notwendig wären.

Die erste Filterbettschicht 24 ist im gewählten Beispiel eine Sandschicht von 0,8 m Dicke, mit einer durchschnittlichen Korngröße von 0,6 mm. Auf diese Weise werden mit einer physikalischen Filtrierung gute Filterergebnisse beim Herausfiltern von Aerosolen aus dem zu filternden Mediumstrom erzielt.

Die erste Gewebeschicht 26 ist im gewählten Beispiel ein Glasfiebergewebe, dessen Maschenweite so gewählt ist, dass diese kleiner ist als die durchschnittliche Korngröße des Filtermaterials der ersten Filterbettschicht 24. Auf diese Weise sichergestellt, dass der Filtersand auch in der ersten Filterbettschicht 24 verbleibt. Alternativ hierzu könnte als erste Gewebeschicht 26 auch eine Metallgewebeschicht gewählt werden, welche vergleichbare Vorteile wie ein Glasfiebergewebe aufweist und bei entsprechender Auslegung zusätzlich noch einen Filtereffekt zur Filterung von Aerosolen aufweist.

Die zweite Filterbettschicht 28 ist im gewählten Beispiel ein Molekularsieb, nämlich ein silberdotiertes Zeolith, dass eine vergleichsweise hohe innere Mikroporosität und damit eine entsprechend hohe spezifische Oberfläche aufweist. Das im gewählten Beispiel verwendete Silber des Zeoliths reagiert dabei in Form einer chemischen Sorption mit dem in zu filternden Medium vorhandenen gasförmigen Jod, also auch mit gasförmigem radioaktivem Jod. Auf diese Weise wird auch der radioaktive Anteil des gasförmigen Jods im zu filternden Medium am Zeolith gebunden. Entsprechend geringer ist die Radioaktivität im nunmehr gefilterten Mediumstrom nach dem Durchströmen der zweiten Filterbettschicht 28.

Als zweite Gewebeschicht 30 ist wiederum ein Glasfiebergewebe gewählt, dessen Maschenweite so dimensioniert ist, dass das Zeolith der zweiten Filterbettschicht 28 in dieser verbleibt und nicht etwa in die in Strömungsrichtung nun folgende Tragschicht 32 eindringt. Die Tragschicht 32 ist im gewählten Beispiel eine Schüttung aus Blähton, wobei die einzelnen Blähtonkugeln einen durchschnittlichen Durchmesser von 12 mm aufweisen. Hier sind die durchschnittlichen Durchmesser für eine Körnung oder für einen Blähton, der als Tragschicht 32 verwendet wird, in einer Spanne von 10 mm bis 25 mm üblich. Die Tragschicht 32 liegt im Wesentlichen auf einer Betonschicht 46 auf, die zur Herstellung einer horizontalen ebenen Fläche innerhalb des Druckbehälters 12 in diesen eingebracht wurde.

### Bezugszeichenliste

- 10: Reaktordruckentlastungfiltersystem
- 12: Druckbehälter
- 14: Stützen
- 16: Behälterdom
- 18: Einlassöffnung
- 20: Einlassrohr
- 22: Diffusorelement
- 24: erste Filterbettschicht
- 26: erste Gewebeschicht
- 28: zweite Filterbettschicht
- 30: zweite Gewebeschicht
- 32: Tragschicht
- 34: Rohrelemente
- 36: Ausnehmungen
- 38: Auslassöffnungen
- 40: Mediumsammelbehälter
- 42: Mediumausleiteöffnung
- 44: Auslassrohr
- 46: Betonschicht

## Patentansprüche

1. Reaktordruckentlastungsfiltersystem (10) mit einem Druckbehälter (12) in dem ein Filterbett angeordnet ist, das eine erste Filterbettschicht (24) aufweisend ein erstes Filtermaterial zur Rückhaltung von Aerosolen hat, wobei der Druckbehälter (12) geodätisch oberhalb des Filterbettes wenigstens eine Einlassöffnung (18) aufweist, durch die ein zu filterndes Medium in den Druckbehälter (12) zugeführt ist, wobei das Filterbett von einem geodätisch unten angeordneten Druckbehälterboden durch ein Tragsystem beabstandet ist, wobei eine Druckbehälterwand im Druckbehälterboden und/oder in einem Druckbehälterwandbereich zwischen dem Druckbehälterboden und dem Filterbett wenigstens eine Auslassöffnung (38) aufweist, durch die das gefilterte Medium nach dem Durchströmen des Filterbettes aus dem Druckbehälter (12) ausgeleitet ist, wobei das Filterbett eine zweite horizontal angeordnete Filterbettschicht (28) mit einem zweiten Filtermaterial zur Abscheidung von gasförmigen radioaktiven Stoffen aufweist, und wobei die zweite Filterbettschicht (28) in geodätischer Richtung oberhalb des Tragsystems angeordnet ist,
**dadurch gekennzeichnet, dass**
die zweite Filterbettschicht (28) eine Stützstruktur aufweist, die eine Vielzahl von Stützzellen hat und für einen Mediumstrom aus der Richtung von geodätisch oberhalb der zweiten Filterbettschicht (28) in Richtung der Tragstruktur gasdurchlässig ist, dass das zweite Filtermaterial in Zwischenräumen der Stützstruktur oder / und in den Stützzellen aufgenommen ist, und dass die zweite Filterbettschicht (28) zwischen einer ersten (26) und einer zweiten gasdurchlässigen, horizontal gelegenen Gewebeschicht (30) horizontal angeordnet ist.

2. Reaktordruckentlastungsfiltersystem (10) nach Anspruch 1, **dadurch gekennzeichnet, dass** das zweite Filtermaterial als Molekularsieb ausgestaltet ist.

3. Reaktordruckentlastungsfiltersystem (10) nach Anspruch 2, **dadurch gekennzeichnet, dass** das Molekularsieb ein natürliches oder synthetisches Zeolith ist.

4. Reaktordruckentlastungsfiltersystem (10) nach einem der vorherigen Ansprüche, **dadurch gekennzeichnet, dass** das zweite Filtermaterial eine materialabhängige Druckfestigkeit aufweist, und dass die Dicken der Filterbettschichten (24, 28) so gewählt sind, dass ein vorbestimmter Druckfestigkeitswert, der geringer ist als der Wert der materialabhängigen Druckfestigkeit, an jeder Stelle der zweiten Filterschicht (28) unterschritten ist.

5. Reaktordruckentlastungsfiltersystem (10) nach einem der vorherigen Ansprüche, **dadurch gekennzeichnet, dass** eine gemessene Istdicke der zweiten Filterbettschicht (28) eine Abweichung von höchstens +/- 5% eines vorgegebenen Solldickenwertes für die zweite Filterbettschicht (28) aufweist.

6. Reaktordruckentlastungsfiltersystem (10) nach einem der vorherigen Ansprüche, **dadurch gekennzeichnet, dass** durch eine Vergrößerung einer Schichtdicke der zweiten Filterbettschicht (28) eine Verweilzeit des zu filternden Mediums in der zweiten Filterbettschicht (28) bis zu einem vorgegebenen Wert verlängerbar ist, und dass durch eine Verringerung der Schichtdicke der zweiten Filterbettschicht (28) die Verweilzeit des zu filternden Mediums in der zweiten Filterbettschicht (28) bis zu einem vorgegebenen Wert verkürzbar ist.

7. Reaktordruckentlastungsfiltersystem (10) nach einem der vorherigen Ansprüche, **dadurch gekennzeichnet, dass** die zweite Filterbettschicht (28) zwischen der ersten Filterbettschicht (24) und dem Tragsystem angeordnet ist.

8. Reaktordruckentlastungsfiltersystem (10) nach einem der vorherigen Ansprüche, **dadurch gekennzeichnet, dass** die Stützzellen bei einem gedachten-Querschnitt in horizontaler Richtung durch die Stützstruktur hohlzylindrisch sind und der Hohlzylinder im gedachten Querschnitt wabenförmig, quadratischen, rechteckig, kreisförmigen, elliptisch oder rautenförmig ist.

9. Reaktordruckentlastungsfiltersystem (10) nach Anspruch 8, **dadurch gekennzeichnet, dass** durch eine einsprechende Gestaltung der Stützstruktur ein freier Querschnitt, der für das zu filternde Medium für eine Durchströmung der zweiten Filterbettschicht (28) zur Verfügung steht, vorgebbar ist, dass bei einer Verringerung des freien Querschnittes eine Verkürzung einer bestimmten Verweilzeit des zu filternden Mediums in der zweiten Filterbettschicht (28) bis auf einen vorgegebenen Wert erreicht ist, und dass bei einer Vergrößerung des freien Querschnittes eine Verlängerung der bestimmten Verweilzeit des zu filternden Mediums in der zweiten Filterbettschicht (28) bis zu einem vorbestimmten Wert erreicht ist.

10. Reaktordruckentlastungsfiltersystem (10) nach einem der vorherigen Ansprüche, **dadurch gekennzeichnet, dass** im Filterbett zwischen der ersten (24) und zweiten Filterbettschicht (28) in horizontaler Richtung ein Lochblech angeordnet ist, dass das Lochblech von der geodätisch weiter unten liegenden Filterbettschicht, also je nachdem von der ersten (24) oder von der zweiten Filterbettschicht (28), einen so großen Abstand aufweist, dass der Abstand als Beruhigungsstrecke für die Strömung für das zu filternde Medium geeignet ist.

11. Reaktordruckentlastungsfiltersystem (10) nach einem der vorherigen Ansprüche, **dadurch gekennzeichnet, dass** im Filterbett zwischen der ersten (24) und zweiten Filterbettschicht (28) eine dritte Filterbettschicht horizontal angeordnet ist, die ein drittes Filtermaterial zur Absorption von säurehaltigen Bestandteilen im zu filternden Medium aufweist.

12. Reaktordruckentlastungsfiltersystem (10) nach einem der vorherigen Ansprüche, **dadurch gekennzeichnet, dass** das Tragsystem ein Einbauteil im Druckbehälter oder eine Schicht aus einem körnigen Material oder Blähton ist, welches körniges Material oder Blähton mit einer durchschnittlichen Partikelgröße aufweist, die größer ist als die des ersten Filtermediums.

13. Reaktordruckentlastungsfiltersystem (10) nach Anspruch 12, **dadurch gekennzeichnet, dass** in der Schicht aus einem körnigen Material oder Blähton eine Vielzahl von Rohrelementen (34) angeordnet sind, dass die Rohrelemente (34) mit der wenigstens einen Auslassöffnung (38) verbunden sind und die Rohrelemente (34) solche Ausnehmungen (36) aufweisen oder so perforiert sind, dass das gefilterte Medium in die Rohrelemente (34) gelangt und gleichzeitig vermieden ist, dass körniges Material oder Blähton in die Rohrelemente (34) gelangt.

14. Reaktordruckentlastungsfiltersystem (10) nach einem der vorherigen Ansprüche, **dadurch gekennzeichnet, dass** im Falle von wenigstens zwei Auslassöffnungen (38) ein Mediumsammelbehälter (40) mit den wenigstens zwei Auslassöffnungen (38) so verbunden ist, dass das gefilterte Medium in den Innenbereich des Mediumsammelbehälters (40) gelangt, dass der Mediumsammelbehälter (40) eine Mediumausleiteöffnung (42) aufweist.

15. Reaktordruckentlastungsfiltersystem (10) nach Anspruch 14, **dadurch gekennzeichnet, dass** der Mediumsammelbehälter (40) eine im Wesentlichen torusförmige Gestalt hat.

16. Reaktordruckentlastungsfiltersystem (10) nach einem der vorherigen Ansprüche, **dadurch gekennzeichnet, dass** das erste Filtermaterial ein körniges Filtermaterial oder Sand ist, welches zur Rückhaltung von Aerosolen geeignet ist.

## Claims

1. Reactor pressure-relieving filter system (10) having a pressure vessel (12) in which there is arranged a filter bed which has a first filter-bed layer (24) having a first filter material for retention of aerosols, wherein, geodetically above the filter bed, the pressure vessel (12) has at least one inlet opening (18) through which a medium to be filtered is fed into the pressure vessel (12), wherein the filter bed is spaced apart by a carrying system from a pressure-vessel base which is arranged geodetically at the bottom, wherein a pressure-vessel wall, in the pressure-vessel base and/or in a pressure-vessel-wall region between the pressure-vessel base and the filter bed, has at least one outlet opening (38) through which the filtered medium, after flowing through the filter bed, is discharged from the pressure vessel (12), wherein the filter bed has a second, horizontally arranged, filter-bed layer (28) with a second filter material for separation of gaseous radioactive substances, and wherein the second filter-bed layer (28) is arranged geodetically above the carrying system,
**characterized in that**
the second filter-bed layer (28) has a supporting structure which has a multiplicity of supporting cells and which is gas-permeable for a medium stream from the direction from geodetically above the second filter-bed layer (28) in the direction of the supporting structure, **in that** the second filter material is accommodated in intermediate spaces of the supporting structure and/or in the supporting cells, and **in that** the second filter-bed layer (28) is arranged horizontally between a first (26) and a second gas-permeable, horizontally situated fabric layer (30).

2. Reactor pressure-relieving filter system (10) according to Claim 1, **characterized in that** the second filter material is in the form of a molecular sieve.

3. Reactor pressure-relieving filter system (10) according to Claim 2, **characterized in that** the molecular sieve is a natural or synthetic zeolite.

4. Reactor pressure-relieving filter system (10) according to one of the preceding claims, **characterized in that** the second filter material has a material-dependent compressive strength, and **in that** the thicknesses of the filter-bed layers (24, 28) are selected in such a way that a predetermined compressive-strength value which is less than the value of the material-dependent compressive strength is fallen below at every point of the second filter layer (28) .

5. Reactor pressure-relieving filter system (10) according to one of the preceding claims, **characterized in that** a measured actual thickness of the second filter-bed layer (28) has a deviation of at most +/- 5% of a predefined target-thickness value for the second filter-bed layer (28).

6. Reactor pressure-relieving filter system (10) according to one of the preceding claims, **characterized in that** a dwell time in the second filter-bed layer (28) of the medium to be filtered is able to be lengthened up to a predefined value by increasing a layer thickness of the second filter-bed layer (28), and **in that** the dwell time in the second filter-bed layer (28) of the medium to be filtered is able to be shortened down to a predefined value by reducing the layer thickness of the second filter-bed layer (28).

7. Reactor pressure-relieving filter system (10) according to one of the preceding claims, **characterized in that** the second filter-bed layer (28) is arranged between the first filter-bed layer (24) and the carrying system.

8. Reactor pressure-relieving filter system (10) according to one of the preceding claims, **characterized in that**, in an imaginary cross section in a horizontal direction through the supporting structure, the supporting cells are hollow-cylindrical and, in the imaginary cross section, the hollow cylinder is honeycomb-shaped, square, rectangular, circular, elliptical or rhombic.

9. Reactor pressure-relieving filter system (10) according to Claim 8, **characterized in that**, by way of a corresponding formation of the supporting structure, a free cross section available for flow through the second filter-bed layer (28) to the medium to be filtered is predefinable, **in that**, in the case of the free cross section being reduced, shortening of a particular dwell time in the second filter-bed layer (28) of the medium to be filtered down to a predefined value is achieved, and **in that**, in the case of the free cross section being increased, lengthening of the particular dwell time in the second filter-bed layer (28) of the medium to be filtered up to a predefined value is achieved.

10. Reactor pressure-relieving filter system (10) according to one of the preceding claims, **characterized in that** a perforated plate is arranged in a horizontal direction in the filter bed between the first (24) and second filter-bed layer (28), **in that** the perforated plate has a spacing to the filter-bed layer which is situated geodetically further below, that is to say to the first (24) or to the second filter-bed layer (28) whatever the case may be, which is such that the spacing is suitable as a calming section for the flow for the medium to be filtered.

11. Reactor pressure-relieving filter system (10) according to one of the preceding claims, **characterized in that** a third filter-bed layer is arranged horizontally in the filter bed between the first (24) and second filter-bed layer (28) and has a third filter material for absorption of acidic components in the medium to be filtered.

12. Reactor pressure-relieving filter system (10) according to one of the preceding claims, **characterized in that** the carrying system is a built-in part in the pressure vessel or is a layer of a particulate material or expanded clay, which particulate material or expanded clay has an average particle size that is larger than that of the first filter medium.

13. Reactor pressure-relieving filter system (10) according to Claim 12, **characterized in that** a multiplicity of tubular elements (34) are arranged in the layer of a particulate material or expanded clay, **in that** the tubular elements (34) are connected to the at least one outlet opening (38) and the tubular elements (34) have cutouts (36) which are such that, or are perforated in such a way that, the filtered medium passes into the tubular elements (34) and at the same time passing of particulate material of expanded clay into the tubular elements (34) is avoided.

14. Reactor pressure-relieving filter system (10) according to one of the preceding claims, **characterized in that**, in the case of at least two outlet openings (38), a medium-collecting container (40) is connected to the at least two outlet openings (38) in such a way that the filtered medium passes into the inner region of the medium-collecting container (40), and that the medium-collecting container (40) has a medium-discharge opening (42).

15. Reactor pressure-relieving filter system (10) according to Claim 14, **characterized in that** the medium-collecting container (40) has a substantially toroidal shape.

16. Reactor pressure-relieving filter system (10) according to one of the preceding claims, **characterized in that** the first filter material is a particulate material, or sand, which is suitable for retention of aerosols.

## Revendications

1. Système de filtre de décharge de pression de réacteur (10) avec un récipient sous pression (12) dans lequel est agencé un lit filtrant ayant une première couche de lit filtrant (24) présentant un premier matériau filtrant pour la rétention d'aérosols, le récipient sous pression (12) présentant, géodésiquement au-dessus du lit filtrant, au moins une ouverture d'entrée (18) à travers laquelle un milieu à filtrer est amené dans le récipient sous pression (12), le lit filtrant étant espacé d'un fond de récipient sous pression agencé géodésiquement en dessous par un système de support, une paroi du récipient sous pression présentant dans le fond de récipient sous pression et/ou dans une zone de paroi du récipient sous pression entre le fond de récipient sous pression et le lit filtrant au moins une ouverture de sortie (38) à travers laquelle le milieu filtré est déchargé du récipient sous pression (12) après avoir traversé le lit filtrant, le lit filtrant présentant une deuxième couche de lit filtrant (28) agencée horizontalement, avec un deuxième matériau filtrant pour la séparation de substances radioactives gazeuses, et la deuxième couche de lit filtrant (28) étant agencée au-dessus du système de support dans la direction géodésique,
**caractérisé en ce que**
la deuxième couche de lit filtrant (28) présente une structure de soutien ayant une pluralité de cellules de soutien et étant perméable aux gaz pour un courant de milieu depuis la direction géodésiquement au-dessus de la deuxième couche de lit filtrant (28) en direction de la structure de support, **en ce que** le deuxième matériau filtrant est reçu dans des espaces intermédiaires de la structure de soutien et/ou dans les cellules de soutien, et **en ce que** la deuxième couche de lit filtrant (28) est agencée horizontalement entre une première (26) et une deuxième couche de tissu (30) perméables aux gaz, placées horizontalement.

2. Système de filtre de décharge de pression de réacteur (10) selon la revendication 1, **caractérisé en ce que** le deuxième matériau filtrant est conçu sous forme de tamis moléculaire.

3. Système de filtre de décharge de pression de réacteur (10) selon la revendication 2, **caractérisé en ce que** le tamis moléculaire est une zéolite naturelle ou synthétique.

4. Système de filtre de décharge de pression de réacteur (10) selon l'une quelconque des revendications précédentes, **caractérisé en ce que** le deuxième matériau filtrant présente une résistance à la pression dépendante du matériau, et **en ce que** les épaisseurs des couches de lit filtrant (24, 28) sont choisies de telle sorte qu'une valeur de résistance à la pression prédéterminée, qui est inférieure à la valeur de la résistance à la pression dépendante du matériau, n'est pas atteinte en tout point de la deuxième couche filtrante (28).

5. Système de filtre de décharge de pression de réacteur (10) selon l'une quelconque des revendications précédentes, **caractérisé en ce qu'**une épaisseur réelle mesurée de la deuxième couche de lit filtrant (28) présente un écart d'au plus +/- 5 % d'une valeur d'épaisseur de consigne prédéfinie pour la deuxième couche de lit filtrant (28).

6. Système de filtre de décharge de pression de réacteur (10) selon l'une quelconque des revendications précédentes, **caractérisé en ce que**, par une augmentation d'une épaisseur de couche de la deuxième couche de lit filtrant (28), un temps de séjour du milieu à filtrer dans la deuxième couche de lit filtrant (28) peut être prolongé jusqu'à une valeur prédéfinie, et **en ce que**, par une réduction de l'épaisseur de couche de la deuxième couche de lit filtrant (28), le temps de séjour du milieu à filtrer dans la deuxième couche de lit filtrant (28) peut être raccourci jusqu'à une valeur prédéfinie.

7. Système de filtre de décharge de pression de réacteur (10) selon l'une quelconque des revendications précédentes, **caractérisé en ce que** la deuxième couche de lit filtrant (28) est agencée entre la première couche de lit filtrant (24) et le système de support.

8. Système de filtre de décharge de pression de réacteur (10) selon l'une quelconque des revendications précédentes, **caractérisé en ce que** les cellules de soutien sont cylindriques creuses dans une section transversale imaginaire dans la direction horizontale à travers la structure de soutien et le cylindre creux est en forme de nid d'abeilles, carré, rectangulaire, circulaire, elliptique ou en forme de losange dans la section transversale imaginaire.

9. Système de filtre de décharge de pression de réacteur (10) selon la revendication 8, **caractérisé en ce qu'**une section transversale libre, qui est disponible pour le milieu à filtrer pour un passage à travers la deuxième couche de lit filtrant (28), peut être prédéfinie par une conception appropriée de la structure de soutien, **en ce qu'**en cas de réduction de la section transversale libre, un raccourcissement d'un temps de séjour déterminé du milieu à filtrer dans la deuxième couche de lit filtrant (28) jusqu'à une valeur prédéfinie est obtenu, et **en ce qu'**en cas d'augmentation de la section transversale libre, un prolongement du temps de séjour déterminé du milieu à filtrer dans la deuxième couche de lit filtrant (28) jusqu'à une valeur prédéterminée est obtenu.

10. Système de filtre de décharge de pression de réacteur (10) selon l'une quelconque des revendications précédentes, **caractérisé en ce qu'**une plaque perforée est agencée dans le lit filtrant entre la première (24) et la deuxième couche de lit filtrant (28) dans la direction horizontale, **en ce que** la plaque perforée présente une distance par rapport à la couche de lit filtrant située géodésiquement plus en dessous, c'est-à-dire, selon le cas, par rapport à la première (24) ou par rapport à la deuxième couche de lit filtrant (28), si grande que la distance est appropriée en tant qu'intervalle de stabilisation pour l'écoulement pour le milieu à filtrer.

11. Système de filtre de décharge de pression de réacteur (10) selon l'une quelconque des revendications précédentes, **caractérisé en ce qu'**une troisième couche de lit filtrant est agencée horizontalement dans le lit filtrant entre la première (24) et la deuxième couche de lit filtrant (28), laquelle troisième couche de lit filtrant présente un troisième matériau filtrant pour l'absorption de constituants acides dans le milieu à filtrer.

12. Système de filtre de décharge de pression de réacteur (10) selon l'une quelconque des revendications précédentes, **caractérisé en ce que** le système de support est une pièce d'insertion dans le récipient sous pression ou une couche en un matériau granulaire ou en argile expansée, ledit matériau granulaire ou ladite argile expansée ayant une granulométrie moyenne supérieure à celle du premier milieu filtrant.

13. Système de filtre de décharge de pression de réacteur (10) selon la revendication 12, **caractérisé en ce qu'**une pluralité d'éléments tubulaires (34) sont agencés dans la couche en un matériau granulaire ou en argile expansée, **en ce que** les éléments tubulaires (34) sont reliés à l'au moins une ouverture de sortie (38) et les éléments tubulaires (34) présentent des évidements (36) ou sont perforés de telle sorte que le milieu filtré parvient dans les éléments tubulaires (34) et qu'il est simultanément évité que du matériau granulaire ou de l'argile expansée ne parvienne dans les éléments tubulaires (34).

14. Système de filtre de décharge de pression de réacteur (10) selon l'une quelconque des revendications précédentes, **caractérisé en ce qu'**en cas d'au moins deux ouvertures de sortie (38), un récipient de collecte de milieu (40) est relié aux au moins deux ouvertures de sortie (38) de telle sorte que le milieu filtré parvient dans la zone intérieure du récipient de collecte de milieu (40), **en ce que** le récipient de collecte de milieu (40) présente une ouverture de déchargement de milieu (42).

15. Système de filtre de décharge de pression de réacteur (10) selon la revendication 14, **caractérisé en ce que** le récipient de collecte de milieu (40) a une forme essentiellement toroïdale.

16. Système de filtre de décharge de pression de réacteur (10) selon l'une quelconque des revendications précédentes, **caractérisé en ce que** le premier matériau filtrant est un matériau filtrant granulaire ou du sable, qui est approprié pour la rétention d'aérosols.
